# FASCICULE DE BREVET EUROPEEN

(11) **EP 3 303 714 B1**
(45) Date de publication et mention de la délivrance du brevet: **09.06.2021**
(21) Numéro de dépôt: 16741655.1
(22) Date de dépôt: 26.05.2016
(51) Int. Cl.: E04B 1/343, F16B 12/46, A47B 47/04, F16B 5/00

(54) **PIÈCE DE JONCTION MÉTALLIQUE POUR L'ASSEMBLAGE D'UNITÉ DE STRUCTURE DE CONSTRUCTION MODULAIRE, UNITÉ ET STRUCTURE ASSOCIÉES**
METALICHES VERBINDUNGSTEIL ZUM VERBINDEN VON MODULAREN STRUKTURENEINHEITEN, ENTSPRECHENDE EINHEIT UND STRUKTUR
METAL JOINING PART FOR ASSEMBLING A MODULAR STRUCTURAL UNIT FOR CONSTRUCTION, AND ASSOCIATED UNIT AND STRUCTURE

(30) Priorité: 27.05.2015 FR 1501089
(43) Date de publication de la demande: 11.04.2018
(73) Titulaire: Biotopes Architecture Et Design, 75019 Paris (FR)
(72) Inventeur: PIRON, Laurent, 75019 Paris (FR)
(74) Mandataire: Delaveau, Sophie
(86) Numéro de dépôt international: PCT/FR2016/051246
(87) Numéro de publication internationale: WO 2016/189255

(56) Documents cités:
- CA-A- 1 213 932
- DE-A1- 3 418 474
- DE-A1- 3 435 481
- DE-A1- 10 051 793
- GB-A- 798 278
- JP-A- H08 200 330
- US-A- 1 380 518

## Description

L'invention concerne principalement une pièce de jonction métallique pour l'assemblage d'une unité de structure de construction modulaire.

L'invention porte en outre sur une unité de structure de construction modulaire, sur un caisson de structure de construction modulaire et sur une structure de construction modulaire.

De façon traditionnelle, les maisons individuelles sont réalisées en pierre, béton, briques, bois, ou tout autre matériau nécessitant un processus de fabrication long et couteux, et faisant appel à plusieurs corps de métier.

Se sont développées ces dernières années des maisons individuelles dont la structure est à base de bois. Le plus souvent, des panneaux formant les murs, les sols et les plafonds sont découpés et assemblés sur chantier ce qui nécessite également de faire appel à des corps de métier spécialisés. Lorsque ces panneaux sont prédécoupés, ils sont généralement de grandes dimensions ce qui nécessite des conditions de transport et de manutention adaptés. Le document DE 34 35 481 A1 divulgue les caractéristiques du préambule de la revendication 1.

L'invention se situe dans le contexte de la fabrication de structures modulaires notamment en bois.

Dans ce contexte, la présente invention vise une structure de construction modulaire pour réaliser un habitat ou tout autre type de bâtiment à base de panneaux préfabriqués mais qui ne nécessitent pas l'emploi d'une main d'œuvre qualifiée ni des conditions de transport et de manutention contraignantes, et qui permettent par ailleurs de réduire significativement les coûts de construction tout en respectant les normes de sécurité dans le domaine de la construction et notamment les « DTU » - Document Technique Unifié - établis en France par la Commission Générale de Normalisation du Bâtiment.

À cet effet, l'invention porte en premier lieu une pièce de jonction métallique permettant de réaliser un motif ou unité de structure, dont la répétition permet la réalisation de la structure globale.

Selon l'invention, la pièce de jonction métallique pour l'assemblage d'unité de structure de construction inclut les caractéristiques de la revendication 1.

La pièce de jonction métallique de l'invention peut également comporter les caractéristiques optionnelles suivantes considérées isolément ou selon toutes les combinaisons techniques possibles :
- la pièce de jonction est réalisée en une seule pièce métallique et comporte trois flancs de fixation aptes à assurer la fixation des trois panneaux sur la dite pièce métallique, muni chacun d'au moins un perçage lisse ou taraudé qui définit un axe de fixation par serrage du flanc considéré contre l'un des trois panneaux, et les trois flancs de fixation définissent une base centrale apte à être en appui de fixation de serrage contre un premier panneau, une première languette de fixation solidaire de la base centrale, apte à être en appui de fixation par serrage contre un second panneau et comportant un perçage taraudé, et une seconde languette de fixation solidaire de la base centrale, apte à être en appui de fixation par serrage contre un troisième panneau et comportant un perçage lisse.
- les deux languettes de fixation sont réalisées par pliage d'une pièce métallique à l'état plan autour de sa partie centrale, laquelle forme, après pliage, base centrale.
- les deux languettes de fixation sont obtenues par pliage d'une pièce métallique plane de forme générale rectangulaire autour de deux lignes de pliages délimitant la base centrale de forme générale tronconique.
- elle comprend la pièce métallique précédemment définie et une pièce de liaison métallique qui comporte un premier flanc de fixation formant premier flanc de fixation de la dite pièce de jonction et comportant un perçage, et un second flanc de fixation comportant une nervure traversante et destiné à être positionné en appui de contact sous la première languette de fixation de la pièce métallique en faisant coïncider le perçage taraudé de la dite première languette de fixation de la pièce métallique avec la nervure traversante du second flanc de fixation de la pièce de liaison, ledit second flanc de fixation et la première languette de fixation ainsi agencés formant ensemble le deuxième flanc de fixation de la dite pièce de jonction,
et en ce que la seconde languette de fixation de la pièce métallique agencée comme précédemment définie avec la pièce de liaison, définit le troisième flanc de fixation de ladite pièce de jonction.

L'invention porte également sur une unité de structure de construction modulaire qui est essentiellement caractérisée en ce qu'elle comporte trois panneaux assemblés entre eux par une pièce de jonction telle que précédemment définie, en ce que chaque panneau comporte un perçage situé en regard d'un perçage d'un flanc de fixation de la dite pièce de jonction contre lequel flanc le panneau est en appui de serrage, en ce que des moyens de fixation à serrage contrôlé de chaque panneau contre le flanc considéré de la pièce de jonction traversent les perçages respectifs du dit flanc et du dit panneau jusqu'à une pièce métallique pouvant être une pièce de jonction métallique telle que précédemment définie, et sur laquelle est prévu un perçage en prise avec les dits moyens de fixation à serrage contrôlé, lequel perçage est taraudé si le perçage coaxial de la pièce de jonction est lisse, et lequel perçage est lisse si le perçage coaxial de la première pièce métallique est taraudé, ce dont il résulte que les trois panneaux fixés sur la pièce de jonction définissent un sommet et trois arêtes adjacentes d'un polyèdre. L'unité de structure de l'invention peut également comporter les caractéristiques optionnelles suivantes considérées isolément ou selon toutes les combinaisons techniques possibles :
- la pièce de jonction est la pièce métallique réalisée en une seule en formant pièce de jonction telle que précédemment définie
- la pièce de jonction est celle comportant la pièce métallique et une pièce de liaison telle que précédemment définie.
L'invention porte en outre sur un caisson de structure de construction modulaire qui est essentiellement caractérisé en ce que qu'il est un polyèdre dont les huit sommets d'extrémités correspondent chacun à une unité de structure de construction modulaire telle que précédemment définie.

L'invention porte enfin sur une structure de construction modulaire qui est essentiellement caractérisée en ce qu'elle comporte une succession de caissons tels que précédemment définis, assemblés entre eux par des unités de structure telles que précédemment définies, et dans laquelle construction les panneaux de plusieurs caissons adjacents qui sont situés dans un même plan peuvent être réalisés en une seule pièce.

Avantageusement, tous les panneaux sont réalisés à base de bois.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en perspective de l'assemblage perpendiculaire de panneaux délimitant partiellement quatre caissons selon l'invention et illustrant quatre unités de structure adjacentes selon l'invention qui sont partiellement représentées, et qui comportent chacune la pièce métallique d'assemblage de l'invention formant pièce de jonction selon une première variante de réalisation,
- la figure 2 est une vue agrandie de la partie cerclée II de la figure 1 sur laquelle l'une des pièces métalliques d'assemblage est représentée en cours d'assemblage, et la figure 2a est une vue en coupe d'un panneau pris en sandwich entre deux pièces métalliques en alignement de perçages,
- la figure 3 est la même vue que celle de la figure 2 pour laquelle deux unités de structure sont achevées, et une troisième est représentée en cours de finalisation,
- la figure 4 est une représentation schématique en perspective des quatre caissons de la figure 1 en cours d'assemblage,
- la figure 5 est une représentation schématique en perspective de l'assemblage perpendiculaire de panneaux délimitant partiellement quatre caissons selon l'invention et illustrant quatre unités de structure adjacentes selon l'invention qui sont partiellement représentées, et qui comportent chacune la première pièce métallique d'assemblage de l'invention formant pièce de jonction selon une deuxième variante de réalisation,
- la figure 6 est une vue agrandie de la partie cerclée VI de la figure 5 sur laquelle l'une des pièces métalliques d'assemblage est représentée en cours d'assemblage, et la figure 6a est une vue en coupe d'un panneau pris en sandwich entre deux pièces métalliques en alignement de perçages,
- la figure 7 est une représentation schématique en perspective de la première pièce métallique de la deuxième variante de réalisation de l'invention,
- la figure 8 est la même vue que celle de la figure 6 pour laquelle trois unités de structure sont achevées, et une troisième est représentée en cours de finalisation,
- la figure 9 est une représentation schématique en perspective des quatre caissons de la figure 5 en cours d'assemblage,
- la figure 10 est une représentation schématique en perspective d'une structure de construction modulaire de l'invention faite de huit caissons selon l'invention, qui sont répartis en deux blocs de quatre caissons et assemblés perpendiculairement entre eux en utilisant, pour les unités de structure situées au niveau du renvoi d'angle, la seconde pièce métallique de la deuxième variante de réalisation,
- la figure 11 est une vue agrandie de la partie cerclée XI de la figure 10 illustrant l'assemblage la seconde pièce métallique de la deuxième variante de réalisation sur une unité de structure située au niveau d'un renvoi d'angle,
- la figure 12 est une représentation schématique en perspective de la seconde pièce métallique de la deuxième variante de réalisation,
- la figure 13 est une représentation schématique en perspective de la structure de construction modulaire de l'invention de la figure 10 à laquelle a été ajouté un bloc de deux caissons selon l'invention,
- la figure 14 est une représentation schématique en perspective de l'assemblage à 45° de deux panneaux par la pièce de jonction de l'invention selon une troisième variante de réalisation, et
- la figure 15 est une représentation schématique de dessus selon la flèche XV de la figure 14.

La structure de construction modulaire de l'invention est faite d'une succession de motifs, qui seront dénommés unités de structure dans la description qui suit, et qui permettent de former des caissons, par exemples cubiques, aptes à réaliser des sois, des plafonds et des murs, l'ensemble de ces structures pouvant être de forme diverse. Ces unités de structure sont faites en premier lieu d'un assemblage de trois panneaux formant un sommet et trois arêtes d'un polyèdre qui sera, à titre d'exemple dans la description qui suit pour les première et deuxième variantes un cube, mais qui peut être dans le cadre de l'invention un pavé ou tout autre type de polyèdre. Ces trois panneaux comportent chacun un perçage au niveau du sommet qu'ils forment et sont maintenus en fixation au niveau de ce sommet par une pièce de jonction métallique qui est constitué dans les première et deuxième variante de réalisation par une pièce métallique réalisée en une seule pièce faite de trois flancs, et des moyens de fixation par serrage contrôlés qui traversent un flanc de la pièce métallique, le perçage du panneau ainsi qu'une autre pièce métallique située de l'autre côté du panneau considéré. Le panneau est ainsi pris en sandwich entre deux pièces métalliques, lesquelles comportent chacune un perçage à travers lequel vient en prise la vis ou le boulon, lequel perçage est soit taraudé, soit lisse, de façon que le perçage d'un panneau débouche d'un côté sur un perçage taraudé et de l'autre sur un perçage lisse, ce qui permet d'assurer pour chacun de ces panneaux une fixation dite à serrage contrôlée.

Dans la description qui suit, on entend par pièce métallique et pièce de jonction métallique, une pièce réalisée dans un métal quelconque, par exemple de l'acier, mais également une pièce métallique telle qu'obtenue par un procédé d'impression à trois dimensions.

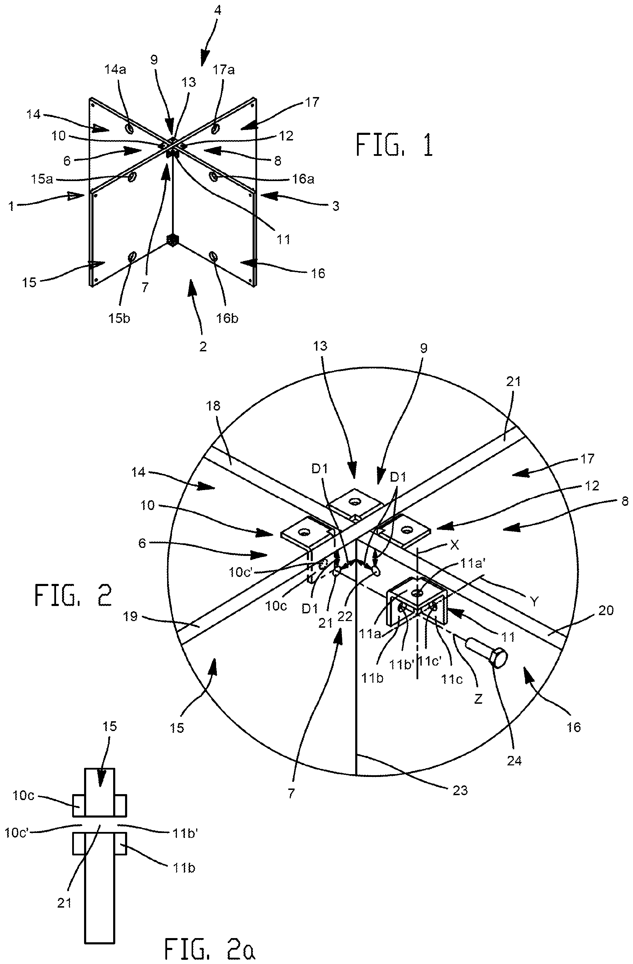

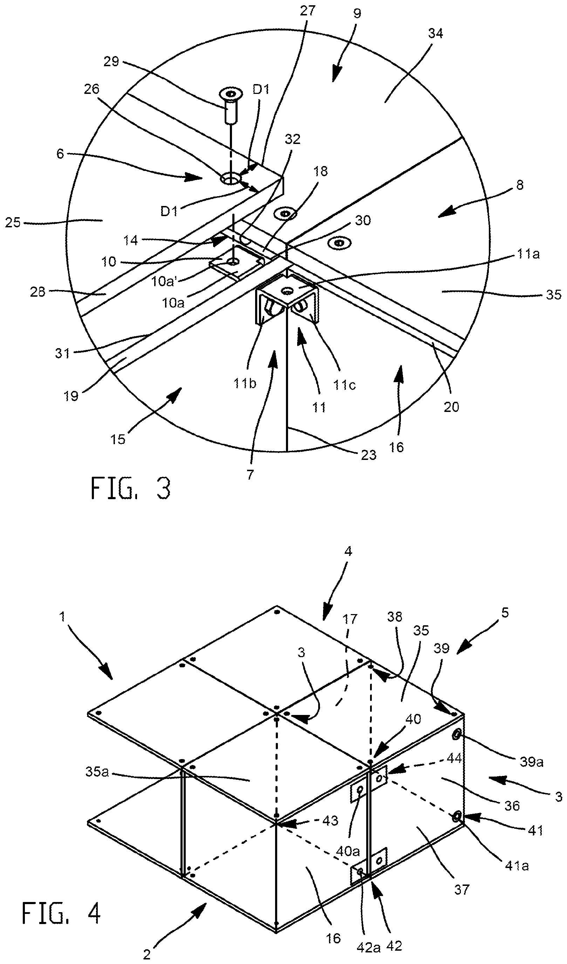

Les figures 1 à 4 illustrent la formation de quatre caissons adjacents 1,2,3,4 slon une première variante de réalisation dont certains sont représentés partiellement sur la figure 4. Ces quatre caissons 1,2,3,4 forment un bloc 5 de quatre caissons. Chaque caisson 1,2,3,4 est un cube dont les huit sommets correspondent chacun à une unité de structure.

La figure 1 illustre la réalisation de quatre unités de structure identiques 6,7,8,9 partiellement représentées. Ces quatre unités de structure 6,7,8,9 assurent l'assemblage des quatre sommets supérieurs adjacents des quatre caissons 1,2,3,4 référencés sur la figure 1 malgré leur représentation partielle.

Chaque unité de structure partielle 6,7,8,9 comporte une pièce métallique 10,11,12,13, formant à elle seule la pièce de jonction 10,11,12,13 dans cette première variante de réalisation, qui solidarise deux panneaux 14,15 ;15,16 ;16,17 ;17,14 perpendiculairement en formant deux faces latérales adjacentes d'un futur caisson 1,2,3,4. Les quatre panneaux 14,15,16,17 assemblés perpendiculairement entre eux forment ainsi une croix, étant entendu que sur l'exemple de réalisation illustré sur les figures 1 à 4, deux panneaux 15,17 situés dans le même plan sont faits d'un seul panneau dont la longueur est double de celle des deux autres panneaux carrés 14,16. Ces quatre panneaux 14,15,16,17 sont des panneaux dit de nervure en bois ou en contreplaqué, et dont la fonction dans la structure de construction modulaire finale est de prendre la charge. Chacun de ces panneaux 14,15,16,17 comporte des perçages 14a,15a,15b,16a,16b,17a permettant de faire passer des câbles à travers la structure finale.

Comme illustré sur la figure 2, les bords supérieurs 18,19,20,21 des quatre panneaux 14,15,16,17 affleurent dans un même plan.

En référence à la figure 2, on considère une unité de structure référencée 7 pour décrire la pièce métallique d'assemblage 11 de l'invention et son positionnement par rapport aux deux panneaux 15,16 qu'elle assemble, étant entendu que cette description s'applique par analogie aux trois autres unités de structure 6,8,9 et leurs pièces métalliques respectives 10,12,13 ainsi qu'à chaque unité de structure formant sommet des quatre caissons 1,2,3,4.

La pièce métallique 11 comporte trois flancs de fixation 11a,11b,11c présentant chacun un perçage 11a', 11b', 11c' qui définit un axe de fixation X,Y,Z par serrage du flanc considéré 11a, 11b, 11c contre un panneau 15,16, le dernier panneau étant décrit plus loin.

Un premier flanc de fixation 11a forme base centrale 11a de la pièce métallique 11 et le perçage 11a' de cette base centrale 11a est taraudé. Les deux autres flancs de fixation 11b,11c forment une première 11b et une seconde languette de fixation 11c. Le perçage 11b' de la première languette est taraudé, tandis que le perçage 11c' de la seconde languette est lisse.

La pièce métallique 11 est réalisée par pliage d'une pièce métallique plan en L autour de sa partie d'angle centrale qui forme, après pliage, la base centrale 11a. Les deux languettes 11b,11c et la base centrale 11a sont de forme générale carrée et sont perpendiculaires entre elles, de sorte que les trois axes de fixation X,Y,Z sont également perpendiculaires entre eux.

Les deux panneaux 15,16 à assembler sur les deux languettes 11b,11c de la pièce métallique comportent chacun au niveau de leur coin respectif un perçage 21,22 destiné à être positionné en regard et sur le perçage 11b',11c' de la languette considérée. Les perçages 21,22 des panneaux 15,16 sont situés chacun à même distance D1 de leur bord supérieur respectif 16,20 mais également à même distance D1 de l'arête commune 23 formée par l'assemblage de ces deux panneaux 15,16. Les perçages 11b', 11c' des deux languettes 11b,11c sont agencées sur ces languettes 11b, 11c de telle sorte que, en référence à la figure 2, lorsque la pièce métallique 11 est en position d'assemblage des deux panneaux 15,16, les perçages 11b',11c' des deux languettes 11b,11c coïncident avec les perçages 21,22 de ces deux panneaux 15,16 et que, dans cette variante, la base centrale 11a affleure au niveau des bords supérieurs 19,20 des deux panneaux considérés 15,16. Il n'est pas nécessaire de décrire le positionnement des perçages 11b',11c' sur les languettes 11b,11c de la pièce métailique 11, d'une part parce que ce positionnement peut varier selon la géométrie de cette pièce métallique 11, mais surtout parce que ce positionnement n'est régit que par la nécessité de coïncider avec les perçages 21,22 des panneaux 15,16 qui eux, sont précisément positionné sur ces panneaux 15,16 comme décrit précédemment.

L'assemblage de la pièce métallique 11 sur les deux panneaux 15,16 une fois que les perçages 11b', 11c' des deux languettes 11b,11c coïncident avec les perçages respectifs 21,22 des deux panneaux 15,16, est réalisée par boulonnage de la pièce métallique 11 sur ces deux panneaux 15,16 au moyen d'un boulon 24 qui, prenant l'exemple de la languette référencée 11b, traverse le perçage 11b' de cette languette 11b, le perçage 21 du panneau 15 ainsi que le perçage 10c' visible sur la figure 2a d'une languette 10c de la pièce métallique 10 de l'unité de structure adjacente 6. Comme représenté sur la figure 2a, le perçage 11b' de la languette 11b de la pièce métallique 11, le perçage 21 du panneau 15 et le perçage 10c' de la languette 10c de l'autre pièce métallique 10 sont coaxiaux ce qui permet au boulon 24 de venir en prise dans ces trois perçages 10c',21,11b'. Selon l'invention, la fixation de ces deux pièces métalliques 10,11 sur le panneau 15 est de type à serrage contrôlé en raison du fait que le perçage 11b' est taraudé alors que le perçage 10c' est lisse.

Il en va de même pour la seconde languette 11c qui est également maintenue en appui de serrage contrôlée par boutonnage à travers le perçage 11c' de cette languette 11c, le perçage 22 du panneau 16 ainsi que le perçage non visible sur cette figure d'une languette de la pièce métallique 12 de l'unité de structure adjacente 8. Ici également, le perçage 11c' de la languette 11c de la pièce métallique 11 étant lisse, le perçage coaxial non visible de la pièce métallique 12 est taraudé, ce dont il résulte le maintien en appui de serrage contrôlé des pièces métallique 11 et 12 contre le panneau 16.

Les quatre pièces métalliques 10,11,12,13 assemblées telles que précédemment décrit maintiennent ainsi les quatre panneaux 14,15,16,17 en appuis de serrage contrôlé dans le positionnement en croix illustré sur la figure 1.

En référence à la figure 3, on décrit la finalisation d'une unité de structure 6, étant entendu que cette description s'applique par analogie aux trois autres unités de structure 7,8,9.

La pièce métallique 10 de cette unité de structure 6 étant préalablement assemblée contre les deux panneaux 14,15, un dernier panneau 25 vient former le sommet 30 du caisson 1 en cours d'élaboration en s'agençant sur les bords supérieurs 18,16 de ces deux panneaux 14,15 et en appui de contact sur la base centrale 10a de la pièce métallique 10. Ce dernier panneau est un panneau de contreventement en bois ou en contreplaqué qui évite la déformation de la structure de construction modulaire finale et comporte un perçage 26 situé à même distance D1 de ses deux bords adjacents 27,28. Le perçage 10a' de la base centrale 10a de la pièce métallique 10 est agencé sur cette languette 10a de telle sorte que lorsque le dernier panneau 25 est positionné en appui de contact sur la base centrale 10a de la pièce métallique 10, le perçage taraudé 10a' de la base centrale 10a de la pièce métallique 10 coïncide avec le perçage 26 de ce dernier panneau 25. L'assemblage du panneau 25 en appui de serrage contrôlé sur la pièce métallique 10 est ensuite réalisé par boulonnage au moyen d'un boulon 29 qui traverse le perçage 10a' de la base centrale 10a de la pièce métallique 10 et le perçage 26 du panneau 25.

L'unité de structure 6 ainsi formée comprend trois panneaux 14,15,25 qui sont assemblés perpendiculairement en définissant un sommet 30, trois arêtes 31,32 d'un cube formant caisson 1, dont seules deux arêtes sont visibles sur la figure 3, la dernière arête étant par analogie celle référencée 23 pour l'unité de structure adjacente 7, la pièce métallique 10 dont les perçages des trois flancs sont positionnés de façon à maintenir comme décrit précédemment les trois panneaux 14,15,25 dans cette position formant sommet d'un cube, ainsi que les pièces métalliques adjacentes 11,13 dont les perçages coaxiaux des perçages des languettes de la pièce métallique 10 sont en opposition de taraudage comme expliqué précédemment pour la pièce métallique 11.

Les unités de structure adjacentes 8,9 sont également finalisées par boutonnage des panneaux de contreventement 34,35 sur les bases centrales respectives des pièces métalliques considérées.

Il est à noter que les perçages des flancs d'une pièce métallique et les perçages des panneaux étant positionnés de façon à coïncider deux à deux, le positionnement des perçages des flancs d'une pièce métallique peuvent être considérer comme correspondant au positionnement des perçages des panneaux une fois que l'unité de structure est finalisée.

En référence à la figure 4, chaque caisson 1,2,3,4 est finalisé par assemblage des trois panneaux restant pour former ce caisson, ces assemblages mettant en jeu pour chaque sommet du caisson une unité de structure telle que précédemment décrite. Il en résulte, en considérant un caisson finalisé 3 qu'il comporte huit panneaux 16,17,35,36,37 et huit sommets 3,38,39,40,41,42,43,44 correspondant tous à une unité de structure telle que précédemment décrite. Les quatre caissons 1,2,3,4 forment ainsi un bloc 5 de quatre caissons, mais on comprend que l'utilisation comme motif de l'unité de structure permet de réaliser des caissons comportant un nombre et un agencement de caissons infinis pour cette première variante dans lequel les panneaux de contreventement et les panneaux de nervure comporte tous au niveau de leurs coins un perçage situé à même distance D1 des deux bords adjacents du panneau considéré.

Il est à noter que les unités de structure périphériques 38,39,40,41, 42 mettent en jeu à l'intérieur du bloc de caissons 5 une pièce métallique telle que précédemment décrite, mais également de l'autre côté du panneau considéré une pièce métallique de configuration différente puisqu'aucun autre caisson n'est prévu.

Prenant par exemple les unités de structure 42 et 44, une pièce métallique rectangulaire 40a,42a vient assurer la fixation par serrage contrôlé des panneaux considérés en présentant des perçages qui sont soit taraudés, soit lisses selon que le perçage coaxial de la pièce métallique située de l'autre côté du panneau est lisse ou taraudé afin d'être en opposition de taraudage.

Pour ce qui est des unités de structure en coin 39,41, c'est ici une rondelle métallique 39a,41 a munie d'un perçage taraudé ou lisse selon la même disposition qui est prévue.

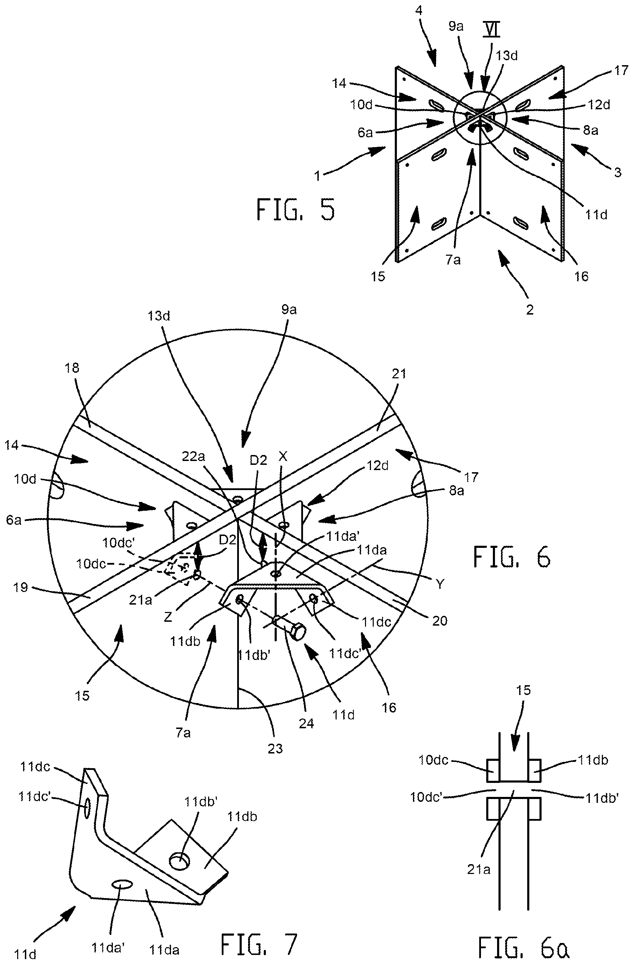

Les figures 5 à 9 illustrent la formation de quatre caissons adjacents 1,2,3,4 selon une seconde variante de réalisation qui permet de réaliser un bloc 5 de caissons 1,2,3,4 similaire à celui de la figure 4 mais en utilisant des pièces métalliques de réalisation des unités de structure différentes. Par souci de clarté, les références appliquées aux panneaux décrits pour cette seconde variante sont identiques à celles des panneaux de la première variante de réalisation.

Chaque caisson 1,2,3,4 est un cube dont les huit sommets correspondent chacun à une unité de structure.

La figure 5 illustre la réalisation de quatre unités de structure identiques 6a,7a,8a,9a partiellement représentées. Ces quatre unités de structure 6a,7a,8a,9a assurent l'assemblage des quatre sommets supérieurs adjacents des quatre caissons 1,2,3,4 référencés sur la figure 1 malgré leur représentation partielle.

Chaque unité de structure partielle 6a,7a,8a,9a comporte une pièce métallique 10d, 11d, 12d, 1 3d, formant à elle seule la pièce de jonction 10d,11d,12d,13d dans cette deuxième variante de réalisation, qui solidarise deux panneaux 14,15 ;15,16 ;116,17 ;17,14 perpendiculairement en formant deux faces latérales adjacentes d'un futur caisson 1,2,3,4. Les quatre panneaux 14,15,16,17 assemblés perpendiculairement entre eux forment ainsi une croix, étant entendu que sur l'exemple de réalisation illustré sur les figures 5 à 9, deux panneaux 15,17 situés dans le même plan sont faits d'un seul panneau dont la longueur est double de celle des deux autres panneaux carrés 14,16. Ces quatre panneaux 14,15,16,17 sont des panneaux dit de nervure dont la fonction dans la structure de construction modulaire finale est de prendre la charge. Chacun de ces panneaux 14,15,16,17 comporte des perçages 14a,15a,15b,16a,16b,17a permettant de faire passer des câbles à travers la structure finale.

Comme illustré sur la figure 6, les bords supérieurs 18,19,20,21 des quatre panneaux 14,15,16,17 affleurent dans un même plan.

En référence aux figures 6 et 7, on considère une unité de structure référencée 7a pour décrire la première pièce métallique d'assemblage 11d formant pièce de jonction de l'invention selon la deuxième variante de réalisation, et son positionnement par rapport aux deux panneaux 15,16 qu'elle assemble, étant entendu que cette description s'applique par analogie aux trois autres unités de structure adjacentes 6a,8a,9a et leurs pièces métalliques respectives 10d,12d,13d.

La pièce métallique 11d comporte trois flancs de fixation 11da,11db,11dc présentant chacun un perçage 11da', 11db', 11dc' qui définit un axe de fixation X,Y,Z par serrage du flanc considéré 11da, 11db, 11dc contre un panneau 15,16, le dernier panneau étant décrit plus loin.

Un premier flanc de fixation 11da forme base centrale 11da de la pièce métallique 11 et le perçage 11da' de cette base centrale 11a est taraudé. Les deux autres flancs de fixation 11db, 11dc forment une première 11db et une seconde languette de fixation 11dc. Le perçage 11db' de la première languette est taraudé, tandis que le perçage 11dc' de la seconde languette est lisse.

La pièce métallique 11a est réalisée par pliage d'une pièce métallique plane rectangulaire autour de sa partie centrale qui forme selon des lignes de pliage inclinées qui forment, après pliage, la base centrale 11da de forme tronconique ou triangulaire. Les deux languettes 11db, 11dc et la base centrale 11a sont perpendiculaires entre elles, de sorte que les trois axes de fixation X,Y,Z sont également perpendiculaires entre eux.

Les deux panneaux 15,16 à assembler sur les deux languettes 11db,11dc de la pièce métallique comportent chacun au niveau de leur coin respectif un perçage 21a,22a destiné à être positionné en regard et sur le perçage 11db',11dc' de la languette considérée. La position des perçages sur ces panneaux de nervure est différente de celle des panneaux de nervure selon la première variante de réalisation. En effet, certaines normes obligent que les perçages formant points de fixation des panneaux de nervure soient situés à une distance D2 correspondant à six diamètres du perçage considéré, du bord adjacent recevant un panneau de contreventement.

Ainsi, les perçages 21a,22a des panneaux 15,16 sont situés chacun à même distance D2 correspondant à une distance D2 depuis l'axe de fixation Y,Z d'au moins six diamètres des dits perçages 21 a,22a jusqu'à leur bord supérieur respectif 19,20. Les perçages 11db',11dc' des deux languettes 11db,11dc sont agencées sur ces languettes 11db,11dc de telle sorte que, en référence à la figure 2, lorsque la pièce métallique 11d est en position d'assemblage des deux panneaux 15,16, les perçages 11db',11dc' des deux languettes 11db,11dc coïncident avec les perçages 21a,22a de ces deux panneaux 15,16 et que, dans cette variante, la base centrale 11da soit située à une certaine distance des bords supérieurs respectifs 19,20 des deux panneaux 15,16 qui correspond approximativement à l'épaisseur du troisième panneau dont l'assemblage finalise la réalisation de l'unité de structure 7a comme il sera décrit plus loin. Il n'est pas nécessaire de décrire le positionnement des perçages 11db',11dc' sur les languettes 11db,11dc de la pièce métallique 11d, d'une part parce que ce positionnement peut varier selon la géométrie de cette pièce métallique 11d, mais surtout parce que ce positionnement n'est régit que par la nécessité de coïncider avec les perçages 21d,22d des panneaux 15,16 qui eux, sont précisément positionné sur ces panneaux 15,16 comme décrit précédemment.

L'assemblage de la pièce métallique 11d sur les deux panneaux 15,16 une fois que les perçages 11db',11dc' des deux languettes 11db,11dc coïncident avec les perçages respectifs 21a,22a des deux panneaux 15,16, est réalisé par boulonnage de la pièce métallique 11 sur ces deux panneaux 15,16 au moyen d'un boulon 24 qui, prenant l'exemple de la languette référencée 11db, traverse le perçage 11db' de cette languette 11db, le perçage 21a du panneau 1 5 ainsi que le perçage 10dc' visible sur la figure 6a d'une languette 10dc de la pièce métallique 10d de i'unité de structure adjacente 6a. Comme représenté sur la figure 6a, le perçage 11db' de la languette 11db de la pièce métallique 11d, le perçage 21 du panneau 15 et le perçage 10dc' de la languette 10dc de l'autre pièce métallique 10 sont coaxiaux ce qui permet au boulon 24 de venir en prise dans ces trois perçages 10dc',21,11db'. Selon l'invention et comme pour la première variante de réalisation, la fixation de ces deux pièces métalliques 10d,11d sur le panneau 15 est de type à serrage contrôlé en raison du fait que le perçage 11db' est taraudé alors que le perçage 10dc' est lisse. Il en va de même pour la seconde languette 11dc qui est également maintenue en appui de serrage contrôlée par boulonnage à travers le perçage 11dc' de cette languette 11dc, le perçage 22a du panneau 16 ainsi que le perçage non visible sur cette figure d'une languette de la pièce métallique 12d de l'unité de structure adjacente 8a. Ici également, le perçage 11dc' de la languette 11dc de la pièce métallique 11d étant lisse, le perçage coaxial non visible de la pièce métallique 12d est taraudé, , ce dont il résulte le maintien en appui de serrage contrôlé de la pièce métallique 11d contre le panneau 16 et de façon concomitante le maintien en appui de serrage contrôlé de la pièce métallique 12d de l'unité de structure adjacente 8a contre ce même panneau 16.

Les quatre pièces métalliques 10d,11d,12d,13d assemblées telles que précédemment décrit maintiennent ainsi les quatre panneaux 14,15,16,17 en appui de serrage contrôlé dans le positionnement en croix illustré sur la figure 1.

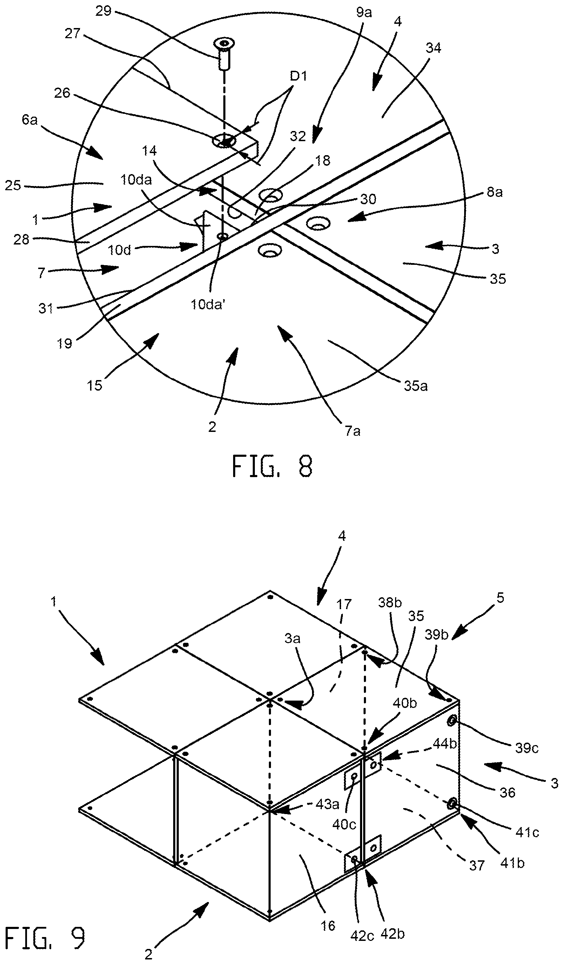

En référence à la figure 8, on décrit la finalisation d'une unité de structure 6a, étant entendu que cette description s'applique par analogie aux trois autres unités de structure 7a,8a,9a.

La pièce métallique 10d de cette unité de structure 6a étant préalablement assemblée contre les deux panneaux 14,15, un dernier panneau 25 vient former le sommet 30 du caisson 1 en cours d'élaboration en s'agençant en appui de contact sur la base centrale 10da de la pièce métallique 10 et en venant affleurer les bords supérieurs respectifs 18,19 de ces deux panneaux 14,15. Ce dernier panneau 25 est un panneau de contreventement évitant la déformation de la structure de construction modulaire finale et comporte, comme dans la première variante de réalisation, un perçage 26 situé à même distance D1 de ses deux bords adjacents 27,28. Le perçage 10da' de la base centrale 10da de la pièce métallique 10 est agencé sur cette languette 10da de telle sorte que lorsque le dernier panneau 25 est positionné en appui de contact sur la base centrale 10da de la pièce métallique 10d, le perçage taraudé 10da' de la base centrale 10da de la pièce métallique 10d coïncide avec le perçage 26 de ce dernier panneau 25. L'assemblage du panneau 25 en appui de serrage contrôlé sur la pièce métallique 10d est ensuite réalisé par boulonnage au moyen d'un boulon 29 qui traverse le perçage 10da' de la base centrale 10da de la pièce métallique 10d et le perçage 26 du panneau 25.

L'unité de structure 6a ainsi formée comprend trois panneaux 14,15,25 qui sont assemblés perpendiculairement en définissant un sommet 30, trois arêtes 31,32 d'un cube formant caisson 1, dont seules deux arêtes sont visibles sur la figure 3, la dernière arête étant par analogie celle référencée 23 sur la figure 6 pour l'unité de structure adjacente 7, ainsi que la pièce métallique 10d dont les perçages des trois flancs 10da,10db,10dc sont positionnés de façon à maintenir comme décrit précédemment les trois panneaux 14,15,25 dans cette position formant sommet d'un cube, ainsi que les pièces métalliques adjacentes 11d,13d dont les perçages coaxiaux des perçages des languettes de la pièce métallique 10d sont en opposition de taraudage comme expliqué précédemment pour la pièce métallique 11d..

Les unités de structure adjacentes 7a,8a,9a sont également finalisées par boutonnage des panneaux de contreventement 34,35,35a sur les bases centrales respectives des pièces métalliques considérées.

Il est à noter que les perçages des flancs de la pièce métallique et les perçages des panneaux étant positionnés de façon à coïncider deux à deux, le positionnement des perçages des flancs d'une pièce métallique peuvent être considérer comme correspondant au positionnement des perçages des panneaux une fois que l'unité de structure est finalisée.

La première pièce métallique 10d,11d,12d,13d de la deuxième variante de réalisation permet ainsi de réaliser l'assemblage d'une unité de structure qui comporte un panneau de contreventement pour lequel le perçage est situé à une distance D1 des deux bords adjacents de ce panneau, et deux panneaux de nervure pour lesquels le perçage est situé à une distance D2 du bord adjacent de ces panneaux recevant le panneau de contreventement.

En référence à la figure 9, chaque caisson 1,2,3,4 est finalisé par assemblage des trois panneaux restant pour former ce caisson, ces assemblages mettant en jeu pour chaque sommet du caisson une unité de structure telle que précédemment décrite à condition que chaque unité de structure mette en jeu deux panneaux de nervure et un panneau de contreventement. Il en résulte, dans ce dernier cas, qu'en en considérant un caisson finalisé 3 qu'il comporte huit panneaux 16,17,35,36,37 et huit sommets 3a,38b,39b,40b,41 b,42b,43b,44b correspondant tous à une unité de structure telle que précédemment décrite. Les quatre caissons 1,2,3,4 forment ainsi un bloc 5 de quatre caissons, mais on comprend que l'utilisation comme motif de l'unité de structure permet de réaliser des caissons comportant un nombre et un agencement de caissons infinis pour cette variante de réalisation dans lequel les panneaux de contreventement comporte tous au niveau de leurs coins un perçage situé à même distance D1 des deux bords adjacents du panneau considéré, et les panneaux de nervure comportent tous au niveau de leurs coins un perçage situé à même distance D2 d'au moins un bord adjacent recevant le panneau de contreventement ou de leurs deux bords ce qui leur permet d'être utilisé dans des sens différents.

Il est à noter que les unités de structure périphériques 38b,39b,4Ob,41b, 42b mettent en jeu à l'intérieur du bloc de caissons 5 une pièce métallique telle que précédemment décrite pour cette seconde variante de réalisation, mais également de l'autre côté du panneau considéré une pièce métallique de configuration différente puisqu'aucun autre caisson n'est prévu.

Prenant par exemple les unités de structure 42b et 44b, une pièce métallique rectangulaire 40c,42c vient assurer la fixation par serrage contrôlé des panneaux considérés en présentant des perçages qui sont soit taraudés, soit lisses selon que le perçage coaxial de la pièce métallique située de l'autre côté du panneau est lisse ou taraudé afin d'être en opposition de taraudage.

Pour ce qui est des unités de structure en coin 39b,41b, c'est ici une rondelle métallique 39c,41c munie d'un perçage taraudé ou lisse selon la même disposition qui est prévue.

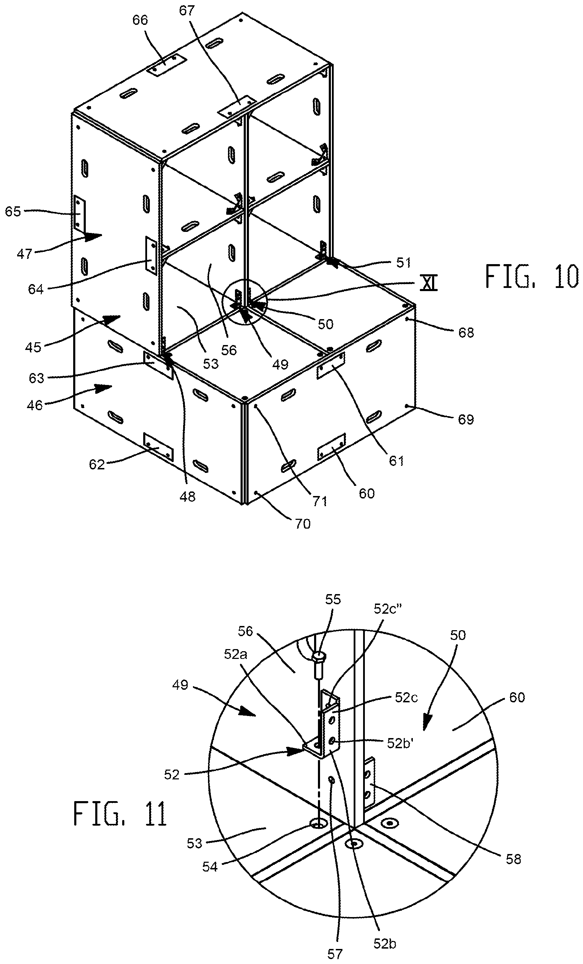

En référence à la figure 10, la réalisation d'un renvoi d'angle 45, c'est-à-dire d'un assemblage de deux blocs de caisson 46,47 entre eux, par exemple perpendiculairement comme c'est le cas sur la figure 10, implique que certaines unités de structure 48,49,50,51 assurent l'assemblage d'un panneau de nervure dont le perçage en angle est situé à la distance D2 du bord adjacent recevant un panneau de contreventement, avec deux panneaux de contreventement dont le perçage en angle est situé à la distance D1 des deux bords adjacents. La première pièce métallique 10d,11d,12d,13d n'est pas adaptée dans ce cas puisque la position des perçages des deux languettes ne permet d'assurer qu'un assemblage avec des panneaux de nervure.

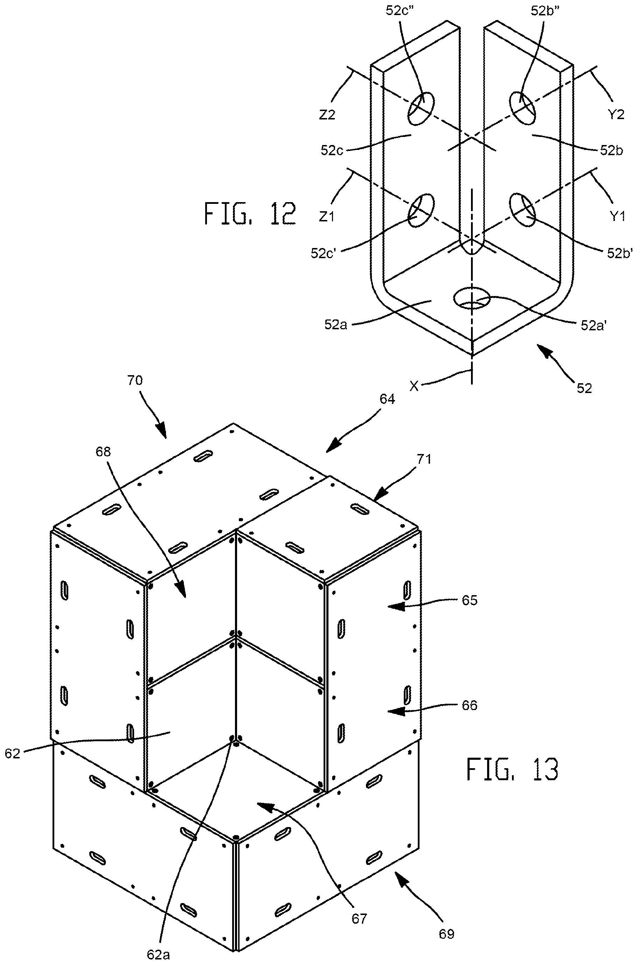

En référence aux figures 11 et 12, une seconde pièce métallique 52 est alors prévue. La seconde pièce métallique 52 formant à elle seule la pièce de jonction 52 d'un second type dans cette seconde variante de réalisation, comporte trois flancs de fixation 52a,52b,52c. Un premier flanc de fixation 52a forme base centrale 52a de la pièce métallique 52 et les deux autres flancs de fixation 52b,52c forment une première 52b et une seconde 52c languette de fixation. La base centrale 52a présente un perçage taraudé 52a' qui définit un axe de fixation par serrage X d'un panneau de contreventement. La première languette de fixation 52b présente un premier perçage taraudé 52b' définissant un axe de fixation par serrage Y1 d'un panneau de contreventement et un second perçage taraudé 52b" définissant un autre axe de fixation par serrage Y2 d'un panneau de nervure. La seconde languette de fixation 52c présente un premier perçage lisse 52c' définissant un axe de fixation par serrage Z1 d'un panneau de contreventement et un second perçage lisse 52c" définissant un autre axe de fixation par serrage Z2 d'un panneau de nervure.

Les premiers perçages 52b', 52c' des deux languettes de fixation 52b,52c permettent d'assurer la fixation en appui de serrage contrôlé de la languette considérée d'un panneau de contreventement. Il en résulte que leur positionnement sur la pièce métallique 52 est telle que celle décrite en référence aux languettes 11b,11c de la pièce métallique 11 de la première variante de réalisation. Les second perçages 52b', 52c' des deux languettes de fixation 52b,52c permettent d'assurer la fixation en appui de serrage contrôlé de la languette considérée d'un panneau de nervure. Il en résulte leur positionnement sur la pièce métallique 52 est telle que celle décrite en référence aux languettes 11db,11dc de la première pièce métallique 11d.

La pièce métallique 52 est réalisée par pliage d'une pièce métallique plan en L autour de sa partie d'angle centrale qui forme, après pliage, la base centrale 52a. Les deux languettes 52b,52c sont de forme générale rectangulaire et la base centrale 52a est de forme générale carrée, les deux languettes 52b,52c et la base centrale 52a étant perpendiculaires entre elles, de sorte que les trois panneaux assemblés sur cette seconde pièce métallique 52 sont perpendiculaires entre eux.

En référence à la figure 11, la première pièce métallique 52 est assemblée par fixation de serrage contrôlée à un panneau de contreventement 53 de la même façon que décrit pour la pièce métallique de la première variante de réalisation et la première pièce métallique de la seconde variante de réalisation, à savoir en faisant coïncider le perçage taraudé 52a' de la base centrale 52a de la pièce métallique 52 avec le perçage 54 du panneau de contreventement, puis boulonnage au moyen d'un boulon 55.

Le panneau de nervure adjacent 56 comporte un perçage 57 situé à distance D2 des deux bords adjacents de ce panneau. L'assemblage de la seconde pièce métallique 52 sur ce panneau de nervure est réalisé en faisant coïncider le second perçage lisse 52c" de la seconde languette 52c de la pièce métallique 52 avec ce perçage 57. De l'autre côté de ce panneau de nervure 56 se trouve une seconde pièce métallique 58 identique à la première pièce métallique 52 et dont la languette non visible en appui contre le panneau de nervure 56 comporte également un second perçage mais qui est taraudé pour assurer le serrage contrôlé des deux pièces métalliques 52,58 contre ce panneau de nervure 56, comme expliqué précédemment pour la pièce métallique de la première variante et la première pièce métallique de la seconde variante. La seconde pièce métallique 58 est identique à la première pièce métallique 52en raison du fait que cette seconde pièce métallique 58 est également impliquée par le renvoi d'angle puisqu'elle comprend l'assemblage d'un panneau de nervure 56, d'un premier panneau de contreventement 60 et d'un second panneau de contreventement non encore assemblé.

L'assemblage de la première pièce métallique 52 sur le panneau de nervure 56 sera ainsi réalisé en faisant coïncider le second perçage 52c" de la seconde languette 52c de la première pièce métallique 52c avec le perçage 57 du panneau de nervure, mais également avec le second perçage de la seconde languette de la seconde pièce métallique 28 située de l'autre côté du panneau de nervure 56, puis boulonnage au moyen d'un boulon non représenté.

La réalisation de l'unité de fixation 49 impliquant cette pièce métallique 52, le panneau de nervure 56 et le panneau contreventement 53, s'achève par la mise en place d'un second panneau de contreventement 62 non représenté sur la figure 11 mais visible sur la figure 13, qui est fixé en appui de serrage contrôlé contre la première languette 52b de la pièce métallique 52 en faisant coïncider le perçage de ce panneau de contreventement 62 avec le premier perçage taraudé 52b' de cette première languette 52b, puisque le perçage du panneau de contreventement est situé à la distance D1 des deux bords adjacents de ce panneau. A l'arrière du panneau de contreventement 62, une rondelle 62a comporte un perçage lisse permettant d'assurer la fixation en appui de serrage contrôlé de la première languette 52b de la première pièce métallique 52 et de la rondelle 62a sur le panneau de contreventement 62.

En référence à la figure 13, une structure de construction modulaire 64 selon l'invention est ainsi faite d'une succession de caissons 65,66,67,68 parfois réunis en blocs de caissons 69,70,71, chaque caisson 65,66,67,68 comportant à chacun de ces sommets une unité de structure selon l'invention mettant en jeu soit uniquement la pièce métallique de la première variante de réalisation lorsque les panneaux de nervure, comme les panneaux de contreventement présentent des perçages en coin situés à une même distance D1 de leurs deux bord adjacents, ou pour les panneaux de nervure du bord adjacent recevant le panneau de contreventement, soit sans le cadre de la deuxième variante de réalisation, la première pièce métallique lorsque l'unité de structure considérée met en jeu un panneau de contreventement dont les perçages en coin sont situés à une même distance D1 des deux bord adjacents, et deux panneaux de nervures dont les perçages en coin sont situés à une distance D2 du bord adjacent recevant le panneau de contreventement, ou la seconde pièce métallique lorsque, dans les renvois d'angle entre caissons ou blocs de caissons, l'unité de structure considérée met en jeu un seul panneau de nervure et deux panneaux de contreventement. Pour chaque unité de fixation, chaque panneau de contreventement et de nervure est pris en sandwich, au niveau d'un perçage considéré, par deux pièces métalliques dont les perçages sont respectivement taraudé et lisse pour assurer la liaison mécanique à serrage contrôlé du panneau considéré. Comme pour la figure 9, les pièces métalliques situés sur les faces extérieures des panneaux de contreventement peuvent être des pièces rectangulaires 60,61,62,63,64,65,66,67 ou des rondelles 68,69,70,71 lorsque l'unité de fixation se trouve au sommet d'un bloc de caissons.

On comprend ainsi que la deuxième variante de réalisation permet, comme pour la première variante de réalisation de former une structure de construction modulaire simple à monter puisque les seules pièces nécessaires sont les panneaux de nervure et de contreventement, et les pièces métalliques, solide au regard de la présence des unités de structure qui assurent une fixation par serrage contrôlée, et d'une grande modularité de forme et de concept, mais qui permet en outre d'assurer la réalisation de la structure dans le respect des normes en matière d'habitat.

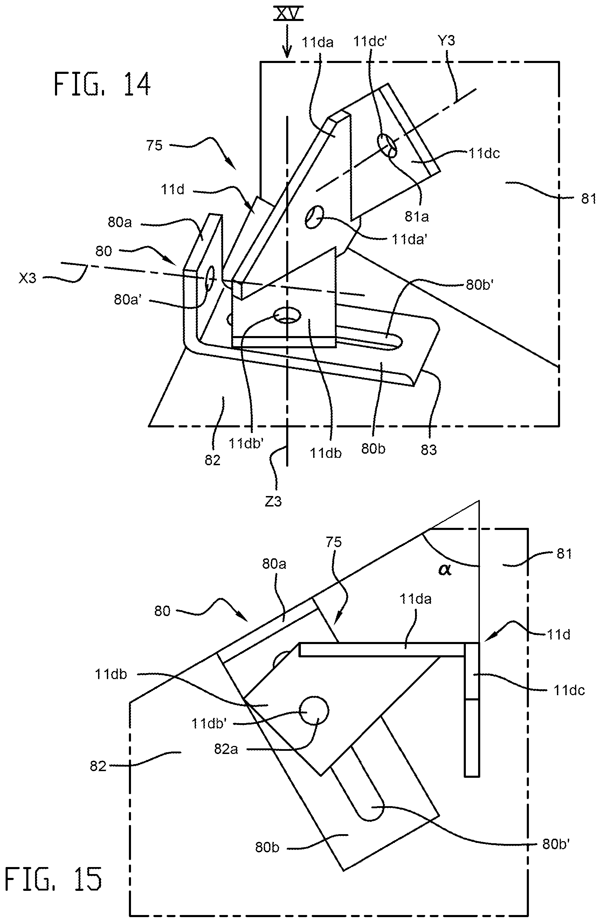

Les première et deuxième variantes de réalisation permettent d'assembler des panneaux perpendiculairement entre eux. En référence aux figures 14 et 15, la troisième variante de réalisation permet d'assembler des panneaux selon un angle inférieur ou supérieur à 90°, de préférence compris entre 45 et 135°.

Dans cette troisième variante de réalisation, l'assemblage des panneaux est assuré par une pièce de jonction 75 comprenant une première pièce métallique 11d identique à la première pièce métallique de la deuxième variante de réalisation, et une seconde pièce métallique de liaison 80.

La première pièce métallique 11d utilisée étant la même que la première pièce métallique de la deuxième variante, les références relatives aux trois flancs de fixation 11da, 11db et 11dc ainsi que les perçages correspondant 11da', 11db' et 11dc' sont reprises à l'identique.

Cette troisième variante de réalisation implique l'utilisation d'une seconde pièce métallique de liaison 80 qui comporte deux flancs de fixation perpendiculaires 80a,80b. Le premier flanc de fixation 80a comporte un perçage 80a' identique au perçage 11da' de la base centrale 11da de la première pièce métallique 11d, c'est-à-dire taraudé dans ces exemples. Le second flanc de fixation 80b est de plus grande longueur que le premier flanc de fixation 80a et comporte une nervure traversante 80b' qui s'étend longitudinalement le long du second flanc de fixation 80b.

L'assemblage d'un premier panneau 81 à un second panneau 82 selon un angle α inférieur à 90° s'effectue de la façon suivante. Le premier panneau 81 comporte un perçage 81a. On positionne la seconde languette de fixation 11dc de façon que son perçage lisse 11dc' coïncide avec le perçage 81a du premier panneau 81 selon l'axe de fixation Y3 , puis l'assemblage est réalisé par boutonnage, comme décrit pour les première et deuxième variante de réalisation, en impliquant une autre pièce métallique non représentée située de l'autre cotée du premier panneau 81 dont le perçage est taraudé, en opposition de taraudage avec le perçage 11dc', ou une rondelle métallique si le premier panneau 81 définit un bord de la structure.

La pièce de liaison 80 est positionnée au bord du second panneau 82 à une position définie préalablement selon l'angle entre les deux panneaux 81,82 souhaité, son second flanc de fixation 80b étant en appui de contact sur ce second panneau 82. Ce positionnement est assuré au moyen d'une encoche non visible sur les figures, faite sur le second panneau au niveau de laquelle l'extrémité libre 83 du second flanc de fixation 80b de la pièce de liaison 80 vient se loger.

Le second panneau 82 comporte un perçage 82a. On fait coïncider le perçage taraudé 11db' de la première languette de fixation 11db avec la nervure traversante 80b' de la pièce de liaison 80 et avec le perçage 82a du second panneau 82 selon l'axe de fixation Z3, puis l'assemblage du second panneau 82 est réalisé par boulonnage en impliquant une autre pièce métallique non représentée située de l'autre cotée du second panneau 82 dont le perçage est lisse, en opposition de taraudage avec le perçage 11db', ou une rondelle métallique si le second panneau 82 définit un bord de la structure.

Le premier flanc de fixation 80a de la pièce métallique de liaison 80 assure quant à lui l'assemblage par boulonnage d'un premier panneau de contreventement non représenté selon l'axe de fixation X3, ce premier flanc de fixation 80a étant assimilé dans sa fonction à la base centrale 11da de la pièce métallique selon les première et seconde variantes, laquelle base centrale 11da n'assure, dans cette troisième variante, aucun assemblage.

On comprend que l'angle souhaité d'assemblage entre le premier 81 et le second 82 panneau est ajusté selon la position du perçage 11db' de la première languette de fixation 11db de la première pièce métallique sur la nervure traversante 80b' de la pièce de liaison 80. Cette ajustement est réalisé pour obtenir un angle d'assemblage α entre les deux panneaux 81,82 variant entre 45 et 135°, l'angle le plus faible étant obtenu lorsque la première languette de fixation 11db' de la première pièce métallique 11d est plus proche du premier flanc de fixation 80a de la pièce de liaison 80, et l'angle d'assemblage le plus élevé étant obtenu lorsque la première languette de fixation 11db' de la première pièce métallique 11d est plus éloignée du premier flanc de fixation 80a de la pièce de liaison 80. On comprend que la longueur de la nervure traversante 80b' définit les angles pouvant être pris entre le premier panneau 81 et le second panneau 82.

On comprend ainsi que la pièce de jonction 75 définit trois flancs de fixation de trois panneaux, à savoir :
un premier flanc de fixation 80a de la pièce de liaison 80 qui vient assurer l'assemblage par appui de serrage d'un premier panneau de contreventement (avec une pièce métallique ou rondelle complémentaire de l'autre côté du panneau de contreventement),
un deuxième flanc de fixation défini par le second flanc de fixation 80b de la pièce de liaison 80 et la première languette de fixation 11db de la pièce métallique 11d qui sont en appui de contact l'un sur l'autre en définissant un perçage dont la fonction lisse ou taraudée est conférée par la nature du perçage 11db' de la première languette de fixation 11db (ici taraudé). Ce deuxième flanc de fixation vient assurer l'assemblage par appui de serrage du second panneau 82 (avec une pièce métallique ou rondelle complémentaire de l'autre côté du panneau comportant un perçage en opposition de taraudage), et
- un troisième flanc de fixation défini par la seconde languette de fixation 11dc de la pièce métallique 11d qui vient assurer l'assemblage par appui de serrage du premier panneau 81 (avec une pièce métallique ou rondelle complémentaire de l'autre côté dudit panneau comportant un perçage en opposition de taraudage).

Il est essentiel, dans cette troisième variante, comme dans les deux premières variantes, que les deuxième et troisième flancs de fixation comportent pour l'un d'entre eux un perçage taraudé et pour l'autre un perçage lisse, cette configuration particulière permettant d'assurer, selon l'invention, la fixation des panneaux par appui de serrage contrôlé.

## Revendications

1. Pièce de jonction métallique pour l'assemblage d'unité de structure de construction, ladite pièce comportant strictement trois flancs de fixation (11a,11b,11c ;11da,11db,11dc ;52a,52b,52c ; 80a,11dc,80b, 11db) aptes à assurer la fixation de trois panneaux (15,16,35a ;56,53,62, 81,82) sur la dite pièce de jonction (11,11d,52,75), et munis chacun d'au moins un perçage lisse ou taraudé (11a',11b',11c' ;11da', 11db', 11dc' ;52a',52b',52c', 80a',11dc',80b', 11db') qui définit un axe de fixation (X,Y,Z ;X,Y1,Z1, X,Y2,Z2, X3,Y3,Z3) par serrage du flanc considéré (11a,11b,11c ;11da,11db,11dc ;52a,52b,52c ; 80a,11dc,80b, 11db) contre l'un des trois panneaux (15,16,35a ;56,53,62, 81,82), les trois flancs de fixation (11a,11b,11c ;11da,11db,11dc ;52a,52b,52c ; 80a,11dc,80b, 11db) comprenant un premier flanc de fixation (80a) ou base centrale (11a,11da,52a) apte à être en appui de fixation de serrage contre un premier panneau (35a,53), un deuxième flanc de fixation (80b, 11db) ou première languette de fixation (11b,11db,52b) apte à être en appui de fixation par serrage contre un second (15,62) panneau et comportant un perçage taraudé (11b',11db' ;52b',52b" ; 11db'), et un troisième flanc de fixation (11dc) ou seconde languette de fixation (11c,11dc,52c), apte à être en appui de fixation par serrage contre un troisième (16,56) panneau, les trois axes de fixation (X,Y,Z; X,Y1 ,Z1) définis par les perçages (11a',11b',11c' ;11da',11db',11dc' ;52a',52b',52c') des trois flancs de fixation (11a,11b,11c ;11da,11db,11dc ;52a,52b,52c) étant deux à deux orthogonaux, la pièce étant **caractérisée en ce que** le troisième flanc de fixation (11dc) ou seconde languette de fixation (11c,11dc,52c) comporte un perçage lisse (11c', 11dc', 52c', 52c", 11dc').

2. Pièce de jonction métallique selon la revendication 1, **caractérisée en ce qu'**elle est réalisée en une seule pièce métallique et comporte trois flancs de fixation (11a,11b,11c ;11da,11db,11dc ;52a,52b,52c) aptes à assurer la fixation des trois panneaux (15,16,35a ;56,53,62) sur la dite pièce métallique (11,11d,52), muni chacun d'au moins un perçage lisse ou taraudé (11a',11b',11c' ;11da',11db',11dc' ;52a',52b',52c') qui définit un axe de fixation (X,Y,Z ;X,Y1,Z1) par serrage du flanc considéré (11a,11b,11c ;11da,11 db,11dc ;52a,52b,52c) contre l'un des trois panneaux (15,16,35a ;56,53,62), et **en ce que** les trois flancs de fixation (11a,11b,11c ;11da,11db,11dc ;52a,52b,52c) définissent une base centrale (11a,11da,52a) apte à être en appui de fixation de serrage contre un premier panneau (35a,53), une première languette de fixation (11b,11db,52b) solidaire de la base centrale (11a,11da,52a), apte à être en appui de fixation par serrage contre un second (15,62) panneau et comportant un perçage taraudé (11b',11db' ;52b',52b"), et une seconde languette de fixation (11c,11dc,52c) solidaire de la base centrale (11a,11da,52a), apte à être en appui de fixation par serrage contre un troisième (16,56) panneau et comportant un perçage lisse (11c',11dc' ;52c',52c").

3. Pièce de jonction métallique selon l'une quelconque des revendications précédentes, **caractérisée en ce que** les deux languettes de fixation (11b,11db,52b ;11c,11dc,52c) sont réalisées par pliage d'une pièce métallique à l'état plan autour de sa partie centrale (11a,11da,52a), laquelle forme, après pliage, base centrale (11a,11da,52a).

4. Pièce de jonction métallique selon la revendication 3, **caractérisée en ce que** les deux languettes de fixation (11db,11dc) sont obtenues par pliage d'une pièce métallique plane de forme générale rectangulaire autour de deux lignes de pliages délimitant la base centrale (11da) de forme générale tronconique.

5. Pièce de jonction métallique selon la revendication 1, **caractérisée en ce qu'**elle comprend la pièce métallique (11d) de la revendication 4 et une pièce de liaison métallique (80) qui comporte un premier flanc de fixation (80a) formant premier flanc de fixation (80a) de la dite pièce de jonction (75) et comportant un perçage (80a'), et un second flanc de fixation (80b) comportant une nervure traversante (80b') et destiné à être positionné en appui de contact sous la première languette de fixation (11db) de la pièce métallique (11d) en faisant coïncider le perçage taraudé (11db') de la dite première languette de fixation (11db) de la pièce métallique (11d) avec la nervure traversante (80b') du second flanc de fixation (80b) de la pièce de liaison (80), ledit second flanc de fixation (80b) et la première languette de fixation (11db) ainsi agencés formant ensemble le deuxième flanc de fixation (80b,11db) de la dite pièce de jonction (75),
et **en ce que** la seconde languette de fixation (11dc) de la pièce métallique (11d) agencée comme précédemment définie avec la pièce de liaison (80), définit le troisième flanc de fixation de ladite pièce de jonction (75).

6. Unité de structure de construction modulaire, **caractérisée en ce qu'**elle comporte trois panneaux (15,16,35a ;56,53,62 ; 81,82) assemblés entre eux par une pièce de jonction (11,11d,52, 75) selon l'une quelconque des revendications 1 à 5, **en ce que** chaque panneau (15,16,35a ;56,53,62, 81,82) comporte un perçage (21,22,26 ;54,57 ;81a,82a) situé en regard d'un perçage (11a',11b',11c' ;11da',11db',11dc' ;52a',52b',52c' ; 80a', 11dc', 80b', 11db') d'un flanc de fixation (11a,11b,11c ;11da,11db,11dc ;52a,52b,52c ; 80a,11dc,80b, 11db) de la dite pièce de jonction (11,11d,52) contre lequel flanc (11a,11b,11c ;11da,11db,11dc ;52a,52b,52c ; 80a,11dc,80b, 11db) le panneau (15,16,35a ;56,53,62 ; 81,82) est en appui de serrage, **en ce que** des moyens de fixation à serrage contrôlé (24,29 ;55) de chaque panneau (15,16,35a ;56,53,62, 81,82) contre le flanc considéré (11a,11b,11c ;11da,11db,11dc ;52a,52b,52c ; 80a,11dc,80b, 11db) de la pièce de jonction (11,11d,52,75) traversent les perçages respectifs (11a',11b',11c', 21,22,26 ;11da',11db',11dc', 21,22,26 ;52a',52b',52c',54,57, 80a', 11dc', 80b', 11db') du dit flanc (11a,11 b,11c ;11da,11db,11dc ;52a,52b,52c, 80a,11dc,80b, 11db) et du dit panneau (15,16,35a ;56,53 ; 81a,82a) jusqu'à une pièce métallique (10,10d,58) pouvant être une pièce de jonction métallique selon l'une quelconque des revendications 1 à 6, et sur laquelle est prévu un perçage en prise avec les dits moyens de fixation à serrage contrôlé (24,29 ;55), lequel perçage est taraudé si le perçage coaxial de la pièce de jonction (11,11d,52, 75) est lisse, et lequel perçage est lisse si le perçage coaxial de la première pièce métallique (11,11d,52, 75) est taraudé, ce dont il résulte que les trois panneaux (15,16,35a ;56,53,62, 81,82) fixés sur la pièce de jonction (11,11d,52, 75) définissent un sommet et trois arêtes adjacentes d'un polyèdre.

7. Unité de structure selon la revendication 6, **caractérisée en ce que** la pièce de jonction est selon l'une quelconque des revendications 2 à 4.

8. Unité de structure selon la revendication 6, **caractérisé en ce que** la pièce de jonction est selon la revendication 5.

9. Caisson de structure de construction modulaire, **caractérisé en ce qu'**il est un polyèdre dont les huit sommets d'extrémités correspondent chacun une unité de structure de construction modulaire selon l'une quelconque des revendications 6 à 8.

10. Structure de construction modulaire, **caractérisée en ce qu'**elle comporte une succession de caissons (1,2,3,4 ; 65,66,67,68) selon la revendication 9, assemblés entre eux par des unités de structure (6,7,8,9,38,39,40,41,42,43,44 ;6a,7a,8a,9a, 38b,39b,40b,41b,42b,43b,44b) selon l'une quelconque des revendications 9 à 11, et dans laquelle structure les panneaux (15,17) de plusieurs caissons adjacents (2,3) qui sont situés dans un même plan peuvent être réalisés en une seule pièce.

11. Structure de construction modulaire selon la revendication 10, **caractérisée en ce que** tous les panneaux sont réalisés à base de bois.

## Patentansprüche

1. Metallischer Verbinder zur Montage einer Konstruktionsstruktureinheit, wobei der Verbinder genau drei Befestigungsflanken (11a, 11b, 11c; 11da, 11db, 11dc; 52a, 52b, 52c; 80a, 11dc, 80b, 11db) aufweist, die geeignet sind, die Befestigung von drei Platten (15, 16, 35a; 56, 53, 62; 81, 82) an dem Verbinder (11, 11d, 52, 75) zu gewährleisten, und jeweils mit mindestens mit einer glatten oder mit einem Gewinde versehenen Bohrung (11a', 11b', 11c'; 11da', 11db', 11dc'; 52a', 52b', 52c'; 80a', 11dc', 80b', 11db') versehen sind, die eine Achse (X, Y, Z; X, Y1, Z1; X, Y2, Z2; X3, Y3, Z3) zur Befestigung der jeweiligen Flanke (11a, 11b, 11c; 11da, 11db, 11dc; 52a, 52b, 52c; 80a, 11dc, 80b, 11db) durch Klemmen an einer der drei Platten (15, 16, 35a; 56, 53, 62; 81, 82) definiert, wobei die drei Befestigungsflanken (11a, 11b, 11c; 11da, 11db, 11dc; 52a, 52b, 52c; 80a, 11dc, 80b, 11db) eine erste Befestigungsflanke (80a) oder mittlere Basis (11a, 11da, 52a), die geeignet ist, mit Klemmbefestigung an einer ersten Platte (35a, 53) anzuliegen, eine zweite Befestigungsflanke (80b, 11db) oder eine erste Befestigungslasche (11b, 11db, 52b), die geeignet ist, mit Klemmbefestigung an einer zweiten Platte (15, 62) anzuliegen, und eine Gewindebohrung (11b', 11db'; 52b', 52b"; 11db') aufweist, und eine dritte Befestigungsflanke (11dc) oder eine zweite Befestigungslasche (11c, 11dc, 52c) umfassen, die geeignet ist, mit Klemmbefestigung an einer dritten Platte (16, 56) anzuliegen, wobei die drei durch die Bohrungen (11a', 11b', 11c'; 11da', 11db', 11dc'; 52a', 52b', 52c') der drei Befestigungsflanken (11a, 11b, 11c; 11da, 11db, 11dc; 52a, 52b, 52c) definierten Befestigungsachsen (X, Y, Z; X, Y1, Z1) paarweise orthogonal sind, **dadurch gekennzeichnet, dass** die dritte Befestigungsflanke (11dc) oder die zweite Befestigungslasche (11c, 11dc, 52c) eine glatte Bohrung (11c', 11dc', 52c', 52c", 11dc') aufweist.

2. Metallischer Verbinder nach Anspruch 1, **dadurch gekennzeichnet, dass** er aus einem einzigen Metallteil ausgeführt ist und drei Befestigungsflanken (11a, 11b, 11c; 11da, 11db, 11dc; 52a, 52b, 52c) aufweist, die geeignet sind, die Befestigung der drei Platten (15, 16, 35a; 56, 53, 62) an dem Metallteil (11, 11d, 52) zu gewährleisten und jeweils mit mindestens mit einer glatten oder mit einem Gewinde versehenen Bohrung (11a', 11b', 11c; 11da', 11db', 11dc'; 52a', 52b', 52c') versehen sind, die eine Achse (X, Y, Z; X, Y1, Z1) zur Befestigung der jeweiligen Flanke (11a, 11b, 11c; 11da, 11db, 11dc; 52a, 52b, 52c) durch Klemmen an einer der drei Platten (15, 16, 35a; 56, 53, 62) definiert, und dass die drei Befestigungsflanken (11a, 11b, 11c; 11da, 11db, 11dc; 52a, 52b, 52c) eine mittlere Basis (11a, 11da, 52a), die geeignet ist, mit Klemmbefestigung an einer ersten Platte (35a, 53) anzuliegen, eine erste Befestigungslasche (11b, 11db, 52b), die fest mit der mittleren Basis (11a, 11da, 52a) verbunden und geeignet ist, mit Klemmbefestigung an einer zweiten Platte (15, 62) anzuliegen, und eine Gewindebohrung (11b', 11db'; 52b', 52b") aufweist, und eine zweite Befestigungslasche (11c, 11dc, 52c) umfassen, die fest mit der mittleren Basis (11a, 11da, 52a) verbunden und geeignet ist, mit Klemmbefestigung an einer dritten Platte (16, 56) anzuliegen, und eine glatte Bohrung (11c', 11dc', 52c', 52c") aufweist.

3. Metallischer Verbinder nach einem der vorhergehenden Ansprüche, **dadurch gekennzeichnet, dass** die beiden Befestigungslaschen (11b, 11db, 52b; 11c, 11dc, 52c) durch Umbiegen eines Metallteils im ebenen Zustand um seinen mittleren Teil (11a, 11da, 52a) ausgeführt sind, der nach dem Umbiegen die mittlere Basis (11a, 11da, 52a) bildet.

4. Metallischer Verbinder nach Anspruch 3, **dadurch gekennzeichnet, dass** die beiden Befestigungslaschen (11db, 11dc) durch Umbiegen eines ebenen, allgemein rechteckigen Metallteils um zwei Biegungslinien erhalten werden, die die mittlere, allgemein kegelstumpfförmige Basis (11da) begrenzen.

5. Metallischer Verbinder nach Anspruch 1, **dadurch gekennzeichnet, dass** er das Metallteil (11d) nach Anspruch 4 und ein metallisches Verbindungsteil (80) umfasst, das eine erste Befestigungsflanke (80a), die die erste Befestigungsflanke (80a) des Verbinders (75) bildet und eine Bohrung (80a') aufweist, und eine zweite Befestigungsflanke (80b) aufweist, die eine Durchgangsrippe (80b') aufweist und dazu bestimmt ist, in kontaktierender Anlage unter der ersten Befestigungslasche (lldb) des Metallteils (11d) positioniert zu werden, indem die Gewindebohrung (11db') der ersten Befestigungslasche (lldb) des Metallteils (11d) mit der Durchgangsrippe (80b') der zweiten Befestigungsflanke (80b) des Verbindungsteils (80) zur Deckung gebracht wird, wobei die zweite Befestigungsflanke (80b) und die erste Befestigungslasche (11db), die derart angeordnet sind, gemeinsam die zweite Befestigungsflanke (80b, 11db) des Verbinders (75) bilden,
und dass die zweite Befestigungslasche (11dc) des Metallteils (11d), die wie oben definiert mit dem Verbindungsteil (80) angeordnet ist, die dritte Befestigungsflanke des Verbinders (75) definiert.

6. Modulare Konstruktionsstruktureinheit, **dadurch gekennzeichnet, dass** sie drei Platten (15, 16, 35a; 56, 53, 62; 81, 82) aufweist, die mittels eines Verbinders (11, 11d, 52, 75) nach einem der Ansprüche 1 bis 5 miteinander zusammengebaut sind, dass jede Platte (15, 16, 35a; 56, 53, 62; 81, 82) eine Bohrung (21, 22, 26; 54, 57; 81a, 82a) aufweist, die gegenüber einer Bohrung (11a', 11b', 11c'; 11da', 11db', 11dc'; 52a', 52b', 52c'; 80a', 11dc', 80b', 11db') einer Befestigungsflanke (11a, 11b, 11c; 11da, 11db, 11dc; 52a, 52b, 52c; 80a, 11dc, 80b, 11db) des Verbinders (11, 11d, 52) angeordnet ist, wobei die Platte (15, 16, 35a; 56, 53, 62; 81, 82) klemmend an dieser Flanke (11a, 11b, 11c; 11da, 11db, 11dc; 52a, 52b, 52c; 80a, 11dc, 80b, 11db) anliegt, dass Mittel (24, 29; 55) zur gesteuerten Klemmbefestigung jeder Platte (15, 16, 35a; 56, 53, 62; 81, 82) an der jeweiligen Flanke (11a, 11b, 11c; 11da, 11db, 11dc; 52a, 52b, 52c; 80a, 11dc, 80b, 11db) des Verbinders (11, 11d, 52, 75) durch die jeweiligen Bohrungen (11a', 11b', 11c'; 21, 22, 26; 11da', 11db', 11dc'; 21, 22, 26; 52a', 52b', 52c'; 54, 57; 80a', 11dc', 80b', 11db') der Flanke (11a, 11b, 11c; 11da, 11db, 11dc; 52a, 52b, 52c; 80a, 11dc, 80b, 11db) und der Platte (15, 16, 35a; 56, 53; 81a, 82a) bis zu einem Metallteil (10, 10d, 58) gehen, bei dem es sich um einen metallischen Verbinder nach einem der Ansprüche 1 bis 6 handeln kann und an dem eine Bohrung in Eingriff mit den Mitteln (24, 29; 55) zur gesteuerten Klemmbefestigung vorgesehen ist, wobei die Bohrung mit einem Gewinde versehen ist, wenn die koaxiale Bohrung des Verbinders (11, 11d, 52, 75) glatt ist, und die Bohrung glatt ist, wenn die koaxiale Bohrung des ersten Metallteils (11, 11d, 52, 75) mit einem Gewinde versehen ist, woraus sich ergibt, dass die drei an dem Verbinder (11, 11d, 52, 75) befestigten Platten (15, 16, 35a; 56, 53, 62; 81, 82) eine Spitze und drei benachbarte Kanten eines Polyeders definieren.

7. Struktureinheit nach Anspruch 6, **dadurch gekennzeichnet, dass** der Verbinder einem der Ansprüche 2 bis 4 entspricht.

8. Struktureinheit nach Anspruch 6, **dadurch gekennzeichnet, dass** der Verbinder Anspruch 5 entspricht.

9. Modularer Konstruktionsstrukturkasten, **dadurch gekennzeichnet, dass** er ein Polyeder ist, dessen acht Endspitzen jeweils einer modularen Konstruktionsstruktureinheit nach einem der Ansprüche 6 bis 8 entsprechen.

10. Modulare Konstruktionsstruktur, **dadurch gekennzeichnet, dass** sie eine Abfolge von Kästen (1, 2, 3, 4; 65, 66, 67, 68) nach Anspruch 9 aufweist, die durch Struktureinheiten (6, 7, 8, 9, 38, 39, 40, 41, 42, 43, 44; 6a, 7a, 8a, 9a, 38b, 39b, 40b, 41b, 42b, 43b, 44b) nach einem der Ansprüche 9 bis 11 miteinander montiert sind, und bei der die Platten (15, 17) mehrerer benachbarter Kästen (2, 3), die auf derselben Ebene angeordnet sind, einstückig ausgeführt sein können.

11. Modulare Konstruktionsstruktur nach Anspruch 10, **dadurch gekennzeichnet, dass** alles Platten auf Holzgrundlage ausgeführt sind.

## Claims

1. Metal junction part for the assembly of a construction structure unit, said part strictly comprising three fastening flanks (11a, 11b, 11c; 11da, 11db, 11dc; 52a, 52b, 52c; 11dc, 80b, 11db) able to ensure the fastening of three panels (15, 16, 35a; 56, 53, 62, 81, 82) to said junction part (11, 11d, 52, 75), and each provided with at least one smooth or tapped drill hole (11a', 11b', 11c'; 11da', 11db', 11dc'; 52a', 52b', 52c', 80a', 11dc', 80b', 11db') which defines a fastening axis (X, Y, Z; X, Y1, Z1, X, Y2, Z2, X3, Y3, Z3) by clamped fastening of the flank in question (11a, 11b, 11c; 11da, 11db, 11dc; 52a, 52b, 52c; 80a, 11dc, 80b, 11db) against one of the three panels (15, 16, 35a; 56, 53, 62, 81, 82), the three fastening flanks (11a, 11b, 11c; 11da, 11db, 11dc; 52a, 52b, 52c; 80a, 11dc, 80b, 11db) comprising a first fastening flank (80a) or central base (11a, 11da, 52a) able to bear with clamped fastening against a first panel (35a, 53), a second fastening flank (80b, 11db) or first fastening tongue (11b, 11db, 52b) able to bear with clamped fastening against a second panel (15, 62) and comprising a tapped drill hole (11b', 11db'; 52b', 52b"; 11db'), and a third fastening flank (lldc) or second fastening tongue (11c, 11dc, 52c), able to bear with clamped fastening against a third panel (16, 56), the three fastening axes (X, Y, Z; X, Y1, Z1) defined by the drill holes (11a', 11b', 11c'; 11da', 11db', 11dc'; 52a', 52b', 52c') of the three fastening flanks (11a, 11b, 11c; 11da, 11db, 11dc; 52a, 52b, 52c) being orthogonal in pairs, the part being **characterized in that** the third fastening flank (11dc) or second fastening tongue (11c, 11dc, 52c) comprises a smooth drill hole (11c', 11dc', 52c', 52c", 11dc').

2. Metal junction part according to Claim 1, **characterized in that** it is produced in one piece as a single metal part and comprises three fastening flanks (11a, 11b, 11c; 11da, 11db, 11dc; 52a, 52b, 52c) able to ensure the fastening of the three panels (15, 16, 35a; 56, 53, 62) to said metal part (11, 11d, 52), each provided with at least one smooth or tapped drill hole (11a', 11b', 11c'; 11da', 11db', 11dc'; 52a', 52b', 52c') which defines a fastening axis (X, Y, Z; X, Y1, Z1) by clamped fastening of the flank in question (11a, 11b, 11c; 11da, 11db, 11dc; 52a, 52b, 52c) against one of the three panels (15, 16, 35a; 56, 53, 62), and **in that** the three fastening flanks (11a, 11b, 11c; 11da, 11db, 11dc; 52a, 52b, 52c) define a central base (11a, 11da, 52a) able to bear with clamped fastening against a first panel (35a, 53), a first fastening tongue (11b, 11db, 52b) secured to the central base (11a, 11da, 52a), able to bear with clamped fastening against a second panel (15, 62) and comprising a tapped drill hole (11b', 11db'; 52b', 52b"), and a second fastening tongue (11c, 11dc, 52c) secured to the central base (11a, 11da, 52a), able to bear with clamped fastening against a third panel (16, 56) and comprising a smooth drill hole (11c', 11dc'; 52c', 52c").

3. Metal junction part according to either one of the preceding claims, **characterized in that** the two fastening tongues (11b, 11db, 52b; 11c, 11dc, 52c) are produced by folding a metal part in the flat state about its central portion (11a, 11da, 52a), which forms, after folding, the central base (11a, 11da, 52a).

4. Metal junction part according to Claim 3, **characterized in that** the two fastening tongues (11db, 11dc) are obtained by folding a flat metal part of rectangular general shape about two fold lines delimiting the central base (11da) of frustoconical general shape.

5. Metal junction part according to Claim 1, **characterized in that** it comprises the metal part (11d) of Claim 4 and a metal connection part (80) which comprises a first fastening flank (80a) forming the first fastening flank (80a) of said junction part (75) and comprising a drill hole (80a'), and a second fastening flank (80b) comprising a through-rib (80b') and intended to be positioned with contact bearing below the first fastening tongue (lldb) of the metal part (11d), causing the tapped drill hole (11db') of said first fastening tongue (lldb) of the metal part (11d) to coincide with the through-rib (80b') of the second fastening flank (80b) of the connection part (80), said second fastening flank (80b) and the first fastening tongue (lldb) thus arranged together forming the second fastening flank (80b, 11db) of said junction part (75),
and **in that** the seocnd fastening tongue (11dc) of the metal part (11d), arranged as defined above with the connection part (80), defines the third fastening flank of said junction part(75).

6. Modular construction structure unit, **characterized in that** it comprises three panels (15, 16, 35a; 56, 53, 62; 81, 82) assembled together by a junction part (11, 11d, 52, 75) according to any one of Claims 1 to 5, **in that** each panel (15, 16, 35a; 56, 53, 62, 81, 82) comprises a drill hole (21, 22, 26; 54, 57; 81a, 82a) situated facing a drill hole (11a', 11b', 11c'; 11da', 11db', 11dc'; 52a', 52b', 52c'; 80a', 11dc', 80b', 11db') of a fastening flank (11a, 11b, 11c; 11da, 11db, 11dc; 52a, 52b, 52c; 80a, 11dc, 80b, 11db) of said junction part (11, 11d, 52), against which flank (11a, 11b, 11c; 11da, 11db, 11dc; 52a, 52b, 52c; 80a, 11dc, 80b, 11db) the panel (15, 16, 35a; 56, 53, 62; 81, 82) bears clamped, **in that** controlled-clamping fastening means (24, 29; 55) for the controlled clamping of each panel (15, 16, 35a; 56, 53, 62, 81, 82) against the flank in question (11a, 11b, 11c; 11da, 11db, 11dc; 52a, 52b, 52c; 80a, 11dc, 80b, 11db) of the junction part (11, 11d, 52, 75) pass through the respective drill holes (11a', 11b', 11c', 21, 22, 26; 11da', 11db', 11dc', 21, 22, 26; 52a', 52b', 52c', 54, 57, 80a', 11dc', 80b', 11db') of said flank (11a, 11b, 11c; 11da, 11db, 11dc; 52a, 52b, 52c, 80a, 11dc, 80b, 11db) and of said panel (15, 16, 35a; 56, 53; 81a, 82a) as far as a metal part (10, 10d, 58) which can be a metal junction part according to any one of Claims 1 to 6, and on which there is provided a drill hole in engagement with said controlled-clamping fastening means (24, 29; 55), which drill hole is tapped if the coaxial drill hole of the junction part (11, 11d, 52, 75) is smooth, and which drill hole is smooth if the axial drill hole of the first metal part (11, 11d, 52, 75) is tapped, with the result that the three panels (15, 16, 35a; 56, 53, 62, 81, 82) fastened to the junction part (11, 11d, 52, 75) define a vertex and three adjacent edges of a polyhedron.

7. Structure unit according to Claim 6, **characterized in that** the junction part is according to any one of Claims 2 to 4.

8. Structure unit according to Claim 6, **characterized in that** the junction part is according to Claim 5.

9. Modular construction structure box, **characterized in that** it is a polyhedron whose eight end vertices each correspond to a modular construction structure unit according to any one of Claims 6 to 8.

10. Modular construction structure, **characterized in that** it comprises a succession of boxes (1, 2, 3, 4; 65, 66, 67, 68) according to Claim 9, assembled together by structure units (6, 7, 8, 9, 38, 39, 40, 41, 42, 43, 44; 6a, 7a, 8a, 9a, 38b, 39b, 40b, 41b, 42b, 43b, 44b) according to any one of Claims 9 to 11, and in which structure the panels (15, 17) of a plurality of adjacent boxes (2, 3) which are situated in the same plane can be produced in one piece as a single part.

11. Modular construction structure according to Claim 10, **characterized in that** all the panels are produced on the basis of wood.
